# EUROPEAN PATENT APPLICATION

(11) **EP 1 988 361 A1**
(43) Date of publication of application: **05.11.2008**
(21) Application number: 07009033.7
(22) Date of filing: 04.05.2007
(51) Int. Cl.: G01C 21/20, G01C 21/36, G01C 21/26

(54) **Multimedia system**

(71) Applicant: Harman Becker Automotive Systems GmbH, 76307 Karlsbad (DE)
(72) Inventor: Wlotzka, Paul, 72622 Nürtingen (DE)
(74) Representative: Bertsch, Florian Oliver

(57) **Abstract**

The invention relates to a portable multimedia system comprising a DVD player (11) configured for play back of DVDs, a television receiver (12) configured for receiving digitally broadcast television programs, a navigation unit (14) configured for guiding the user of the multimedia system to a predetermined destination, a display (16) displaying the video signal components from the DVD player, the television receiver and the navigation unit, and at least two loudspeakers (18) emitting the audio signal components of the DVD player, the television receiver and the navigation unit.

## Description

This invention relates to a portable multimedia system and relates especially to a portable multimedia system providing a navigation function to the user.

### Related Art

In the art a large variety of electronic systems is known. By way of example portable DVD (digital versatile disk) players are known which are configured to play back multimedia files stored on DVDs or CD-ROMs.

Furthermore, portable television receivers are known which can be used for receiving and decoding television programs received by an antenna of the television receiver. Recently, digitally broadcast television programs have been introduced which can also be received via an antenna. One example for such a digitally broadcast television program is DVB-T standing for "digital video broadcasting-terrestrial". In the DVB television signals, the signals are transmitted using the MPEG-2 (motion pictures expert group, second norm) allowing a data rate between 2 megabits per second and 15 megabits per second. For the transmission of a television program data rate of about 3 to 7 megabits per second are necessary. Accordingly, with the use of the MPEG coding it is possible to transmit several television programs and other data contents.

Furthermore, navigation systems are widely used either in vehicles or as stand-alone units, the navigation system guiding a user from a location to a predetermined destination.

The DVD player and the mobile television are often used in vehicles as rear seat entertainment systems. Mobile navigation systems can be advantageous for the user when he or she leaves the vehicle and continues to walk to the predetermined destination. Navigation systems can also be helpful for the user as they do not only provide guiding indications which way to take, but they also provide other information such as sightseeing information or information about hotels etc.

For the user the use of many different electronic devices might be bothersome. Especially when electronic devices such as portable television receivers or DVD players are used in vehicles, it can be advantageous to also provide a navigation system.

### Summary of the Invention

Accordingly, a need exists to provide a system incorporating the above-mentioned different electronic devices into one unit.

This need is met by the features of the independent claim. In the dependent claims preferred embodiment of the invention are described.

According to one aspect of the invention, a portable multimedia system is provided comprising a DVD player configured for the play back of a DVD. Furthermore, the portable multimedia system comprises a television receiver configured for receiving digitally broadcast television programs. Additionally, a navigation unit is provided in the portable multimedia system configured for guiding the user of the multimedia system to a predetermined destination. The system furthermore comprises a display displaying the video signal components from the DVD player, the television receiver and the navigation unit. The system further comprises two loudspeakers outputting the audio signal components of the DVD player, the television receiver and the navigation unit. All these three units, when in use, emit audio and video signal components, by way of example the navigation system can display the route to the destination and may announce the guiding instructions by voice. However, it is also possible that the navigation instructions are only visually presented to the user so that the navigation unit only outputs video signal components. This portable multimedia system allows the user to have one system which can be used for watching a film recorded on a DVD or CD-ROM, for watching a television program, and the system can be used as a navigation unit guiding the user to a destination or for informing the user of other information provided in the navigation unit.

Furthermore, a control unit can be provided controlling the different units within the system, the DVD player, the television receiver and the navigation unit. In order to keep the multimedia system small, the control unit can be configured in such a way that the control unit displays menu items on the display of the multimedia system to be touched by the user for controlling the different functions of the multimedia system. Such a touchscreen display helps to avoid that multiple operating elements have to be provided on the portable multimedia system for controlling the different operating modes of the different units. It should be understood that hard keys can also be provided on the multimedia system in addition to the soft keys shown on the display. Preferably, the different electronic components are provided in one housing, the housing having a main section comprising the display and two end sections laterally situated on opposite ends of the main section. Preferably, the two lateral end sections comprise the loudspeakers, the end sections having an elongated form extending substantially over the whole height of the housing. The two end sections with the loudspeakers may have a semi-cylindrical form, this semi-cylindrical form functioning as a holding element for the user when holding the portable multimedia system.

Furthermore, the control unit controlling the audio signal components can be configured in such a way that the control unit controls the output of different audio channels relative to each other in such a way that even with two loudspeakers a virtual surround sound can be generated. Even though the system only comprises two loudspeakers the user has the impression of a using a system having more than two loudspeakers.

The multimedia system may furthermore comprise a radio receiver adapted to receive analogously or digitally broadcast radio programs. It should be understood that the portable multimedia system may also be configured in such a way that the television receiver is able to receive analogously broadcast television programs in addition to the digitally broadcast television programs.

In order to be able to build a connection to other electronic system, the portable multimedia system may further comprise a USB interface allowing the transfer of data to the multimedia system. The multimedia system may further comprise a data storage unit for storing digital images which could be viewed on the display. Another possibility to transfer data to the multimedia system can be by providing a memory card reading unit in which memory cards such as SC cards or MMC cards can be introduced, the reading unit being able to read and to process the data stored on the respective cards. The data stored on cards can have audio and video components. Furthermore, an audio/video output and input can be provided for transmitting audio/video data to other electronic devices and/or to receive audio/video data from other devices.

The multimedia system may furthermore comprise a writing unit allowing to rip the audio and/or video content on the storage unit of the system. In the case of an audio CD the writing unit can be configured in such a way that storing of the audio content on the storage unit is possible in a compressed format (e.g. MP3). The ripping of a video content can also be possible using a compressed format such as MPEG. When the multimedia system is used in television or radio receiver operating mode, the received television program or radio program can also be stored on the storage unit using known compression techniques.

### Brief Description of the Drawings

The invention will be described in more detail with reference to the accompanying drawings, in which
Fig. 1 shows a schematic view of a multimedia system having a DVD player, a television receiver and a navigation unit,
Fig. 2 shows a perspective view of a first embodiment of the portable multimedia system, and
Fig. 3 shows a perspective view of another embodiment of the multimedia system,
Fig. 4 shows a rear view of another embodiment of the multimedia system,
Fig. 5 shows a perspective rear view of the multimedia system of Fig. 4 to which a radio receiver is coupled,
Fig. 6 is a side view of the multimedia system of Fig. 4,
Fig. 7 is a perspective front view of the multimedia system shown in Fig. 4, and
Fig. 8 shows another side view of the multimedia system.

### Detailed Description of Preferred Embodiments

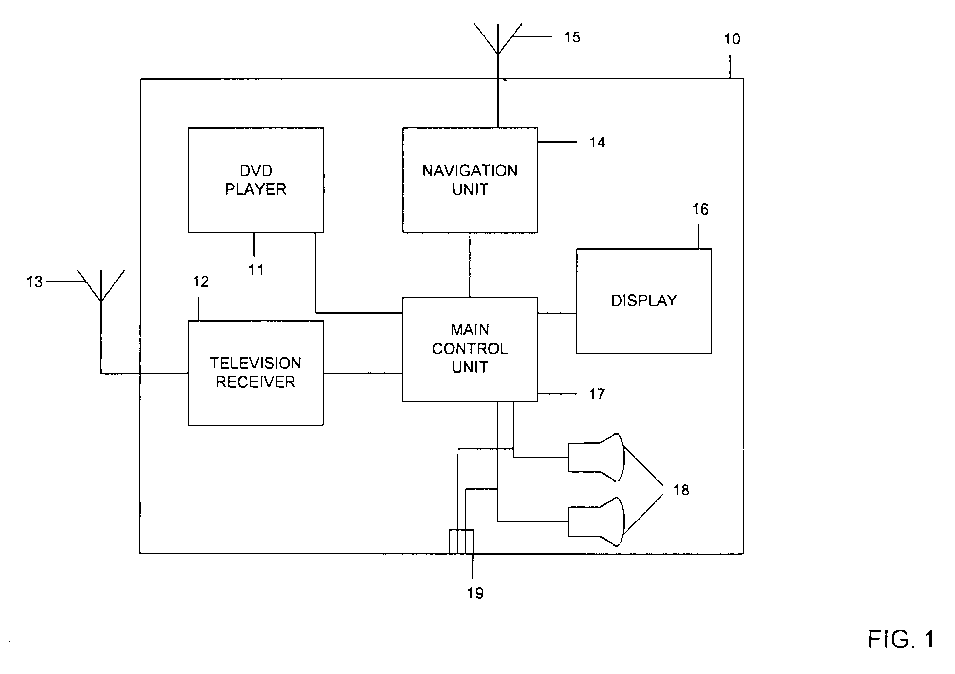

In Fig. 1 a portable multimedia system 10 is shown in a schematic overview. The portable multimedia system 10 comprises a DVD player 11 configured for playing audio files. Furthermore, a television receiver 12 is provided which receives via antenna 13 television programs. Preferably, the television receiver is configured in such a way that it receives digitally broadcast signals. In Europe, for example digital television programs are broadcast using the DVB-T transmission standard. The system further comprises a navigation unit 14 used for guiding the user to a predetermined destination. The navigation unit may provide the user with various navigation functions and features. For example, the unit is able to determine an optimum route to travel by roads between different locations. Using input from the user and optionally from equipment that can determine the physical location of the user (such as a GPS system using an antenna 15 for receiving the satellite signals), the navigation unit examines various routes between two locations and determines an optimum route to travel from a starting location to a destination in a geographic region. The instructions may take the form of audio instructions that are provided along the way as the user is travelling the route. The navigation unit can further be able to show detailed maps on a display 16 outlining the route to the destination or the types of maneuvers to be taken at various locations along the route.

Additionally, a main control unit 17 is provided controlling the operating functioning of the different electronic units. The main control unit can be a single unit controlling the navigation unit, the DVD player and the television receiver, or the main control unit can also be designed in such a way that different sub-control units are provided for each electronic unit.

All three units 11, 12 and 14 supply a signal output to the main control unit, the supplied signals comprising video signal components, or audio signal components or both components. The video signal components of each unit are directed to the display 16, whereas the audio signal components are directed to a pair of loudspeakers 18. The main control unit can be designed in such a way that for each electronic unit 11, 12 or 14 an audio control unit may be provided and a video control unit. However, it is also possible to configure the main control in such a way that one audio control unit and one video processing unit is provided within the main control unit for the two different signal components.

In case of a navigation application visual instructions to the user or the map data are directed to the display 16, whereas an audio output is directed to the two loudspeakers 18. Additionally, a headphone connector 19 can be provided which can be used for transmitting the audio signal components directly to headphones and not to the loudspeakers 18. The audio data provided on a recording medium for play back by the DVD player can be configured in such way that several audio channels are provided, the different audio channels being controlled relative to each other in such a way that a surround sound could be generated when the portable navigation system is used with more than two loudspeakers. The main control unit 17 can now be configured in such a way that the control unit controls (i.e. delays) the different audio channels relative to each other in such a way that even when a stereo loudspeaker system is used as shown in Fig. 1, the user has the impression of hearing an actual surround sound. This virtual surround sound can either be directed to the loudspeakers 18 or via the connecter 19 to headphones (not shown).

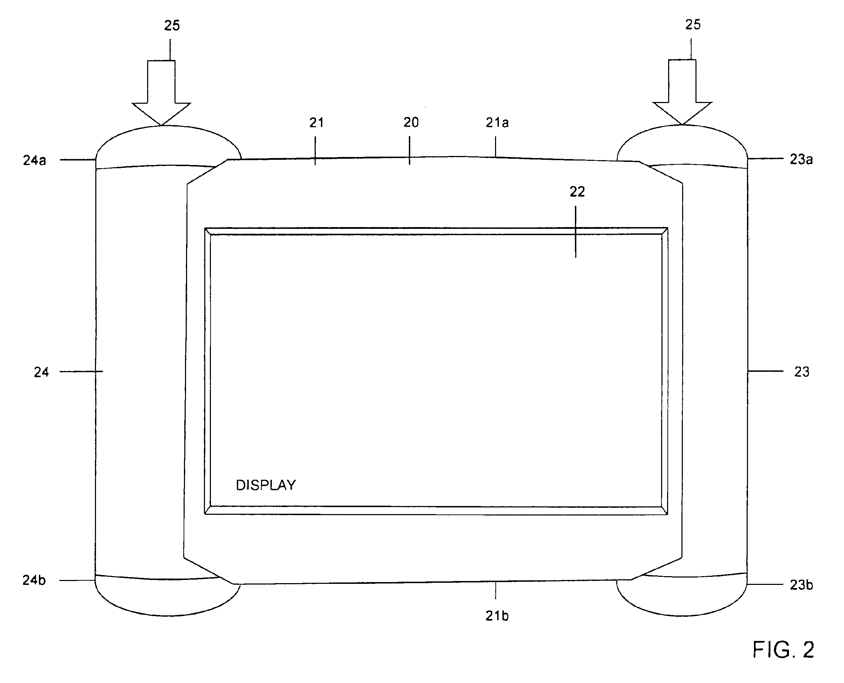

In Fig. 2 one embodiment of the mobile multimedia system is show. The system comprises a housing 20 having a main section 21 in which the display 21 is arranged. The display may a liquid crystal display or a plasma display or any other flat panel display. The housing furthermore comprises a left and a right end section 23 and 24 which have, in the embodiment shown a substantially cylindrical shape. In the embodiment shown, the upper surfaces 23a and 24a of the cylindrically-shaped end parts project over the upper surface 21a of the main section. Additionally, the lower surfaces 23b and 24b project over the lower surface 21b of the main section where the display is arranged. In the left and right end section loudspeakers 25 are arranged at the upper ends. The loudspeakers have a tubular shape emitting the sound in the direction of the axis of the cylindrical end section. The lower ends 23b, 24b serve as support structure when the multimedia system should be held in the upright position. In this example the sound is emitted by the two loudspeakers 25 in the upward direction. In order to further improve the sound characteristics, it is additionally possible to provide small loudspeakers in the main section below or above the display. In this embodiment, the loudspeakers in the cylindrical end section could be configured for outputting lower frequency components (e.g. up to 1000 Hz), whereas the smaller loudspeakers in the main section are configured for outputting the higher frequencies (above 1000 Hz). The loudspeakers provided at both ends of the display have, in addition to design reasons, the advantage that a user holding the portable multimedia system can use the cylindrical end part as holding elements for holding the multimedia system. This helps to avoid that the user has to touch the display for holding the portable multimedia system. Additionally, the two loudspeakers on each side of the display help to improve the sound quality for a user.

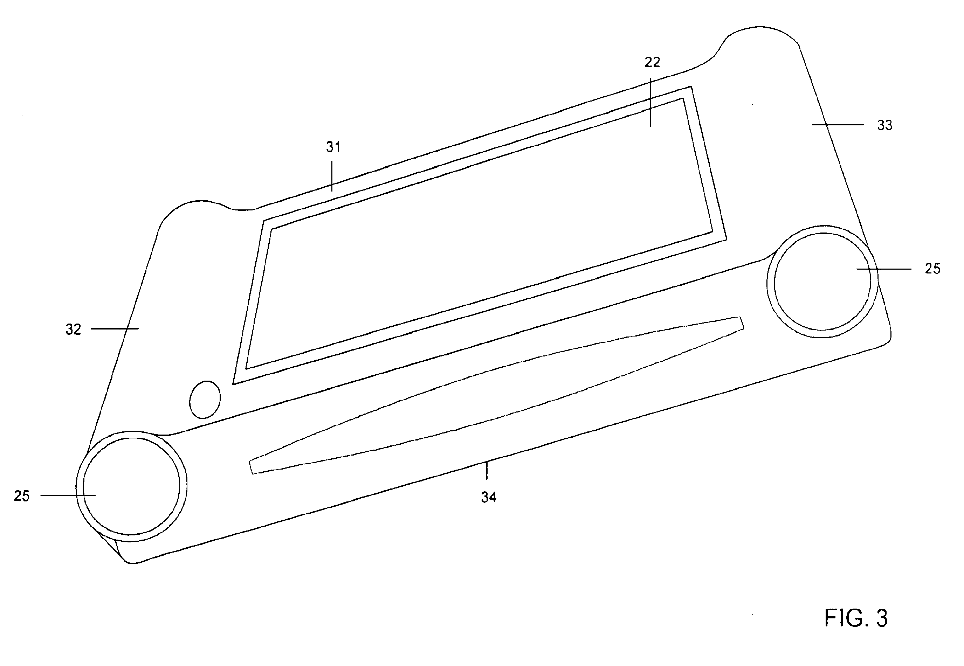

In Fig. 3 another embodiment of the multimedia system is shown. This embodiment mainly corresponds to the embodiment shown in Fig. 2, whereas in the embodiment of Fig. 3 only the upper surface is shown having a shape similar to the one shown in Fig. 2. Again the display 22 is arranged in a main section 31, the two end sections 32 and 33 having a semi-cylindrical form in which the loudspeakers 25 are arranged. The lower surface 34 has a substantially planar form, the planar form improving the stability when the system is placed on a planar surface. As in the embodiment shown in Fig. 2 the quasi-cylindrical shape of the upper part of the housing surface provides a holding element for the user. When not use or when used during movement, the user can grab the system by holding the system either at the left end section 32 or the right end section 33 having a semi-cylindrical shape.

In the embodiment shown in Fig. 2, the two loudspeakers are provided in the upper opening of the two end sections. In the embodiment shown in Fig. 3, the two loudspeakers are provided in the lower openings of the two end sections. However, it is also possible to combine the two embodiments in such a way that loudspeakers are provided in the lower and upper end sections resulting in four loudspeakers in the end sections in total.

The display may be designed as a touchscreen display so that the different functions and operating modes of the different electronic units can be controlled by touching elements shown on the display 22. Due to the fact that the system can be controlled via the display 22, it is not necessary to provide extra manipulation buttons or elements which would increase the size of the overall system.

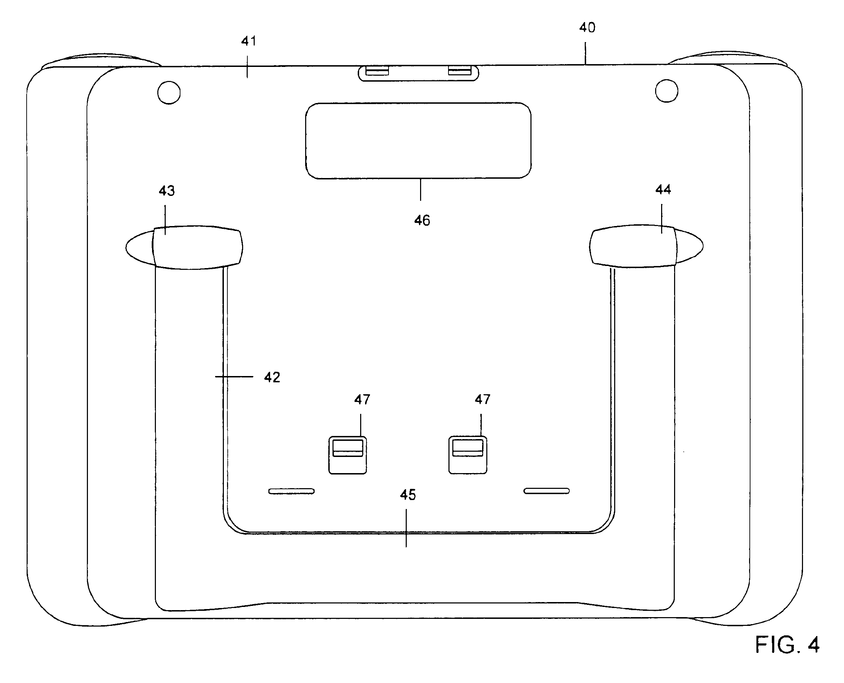

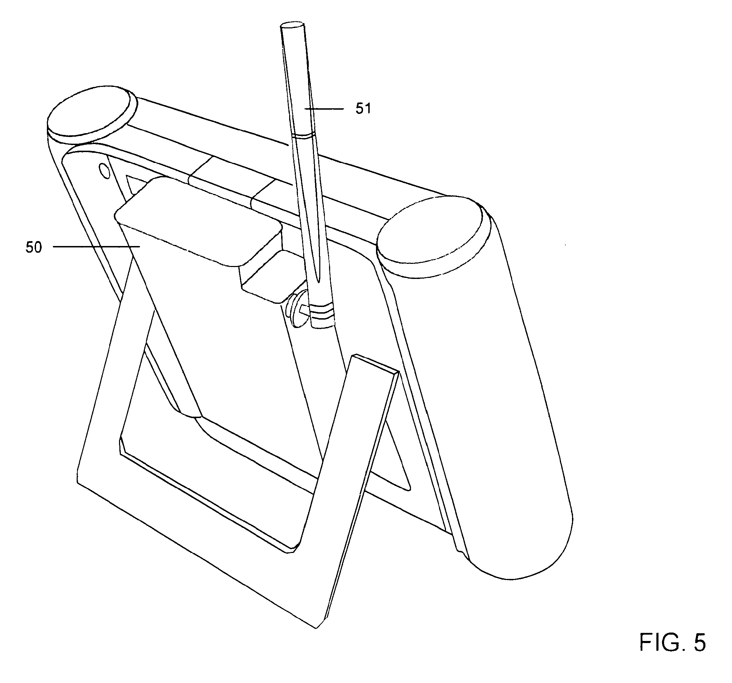

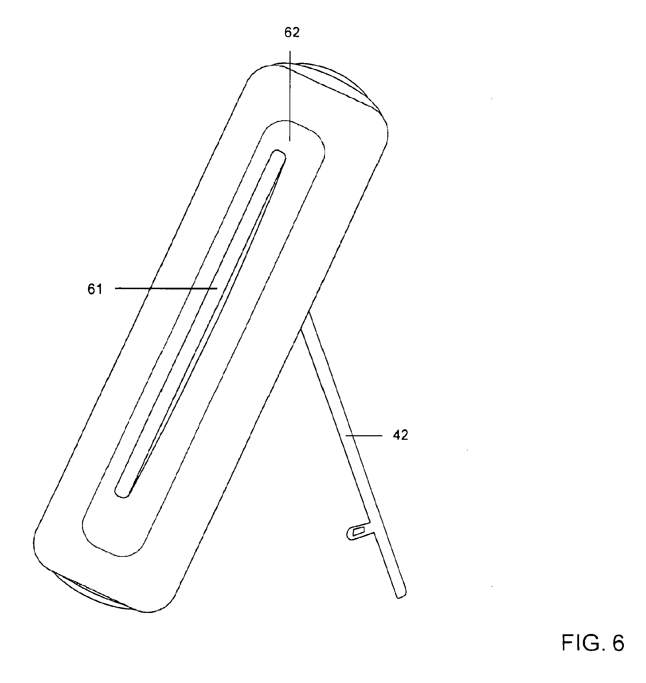

Fig. 4 shows another embodiment of the multimedia system. This embodiment of the multimedia system 40 is shown with its back surface 41 of the housing. The portable multimedia system can be used in many different locations. When the user wants to use the multimedia system without holding it, the multimedia system can be placed on any planar surface with the help of a U-shaped support bar 42. On the back surface of the housing a recessed area is provided in which the U-shaped support bar is positioned when not in used. For design reasons the recessed area can be designed in such a way that the upper surface of the U-shaped support bar is flush with the back surface of the housing. The U-shaped support bar 42 is coupled to the housing at its two free ends 43 and 44, at which the support bar is pivotably fixed to the housing. The support bar can be pivoted in such a way that the lower midsection 45 of the U-shaped support bar can be placed in a spaced relationship relative to the housing as shown in Figs. 5 and 6. In the embodiment shown in Fig. 4 furthermore a cover 46 is shown, the cover 46 hiding a connecting structure with which a radio and/or television receiver as shown in Fig. 5 can be connected to the back surface of the housing. At the back surface of the housing furthermore two recesses 47 are provided, the recesses receiving holding elements from the radio receiver 50 shown in Fig. 5.

In Fig. 5 the multimedia system is shown in a perspective rear view. With the help of the U-shaped support bar the multimedia system can be positioned in such an angle relative to the surface on which it is provided that the user can easily see the information shown on the display. In the embodiment shown in Fig. 5 a radio receiver is additionally coupled to the multimedia system, the radio receiver 50 comprising an antenna 51 for receiving digitally or analogously broadcast radio programs. The radio receiver 50 is connected to the portable multimedia system by the connecting structure hidden behind the cover 46 and is fixedly arranged on the back surface with the help of the two recesses 47.

In Fig. 6 a side view of the portable multimedia system shown in Figs. 4 and 5 is shown. In this side view, the slot 61 provided on the side surface 62 for inserting a DVD is shown.

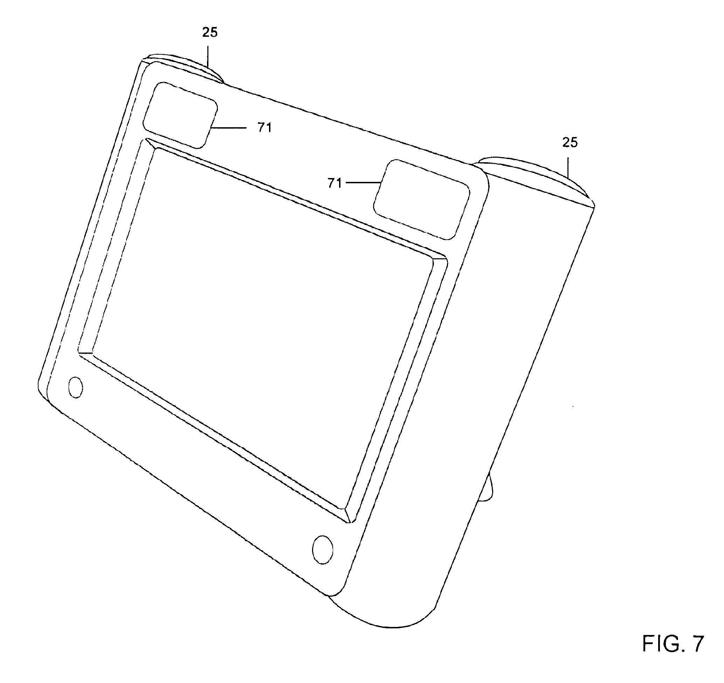

In Fig. 7 a perspective front view of the multimedia system shown in Figs. 4-6 is shown in more detail. In the embodiment shown the system comprises in addition to the two loudspeakers 25 loudspeakers 71 provided on the front surface of the portable multimedia system.

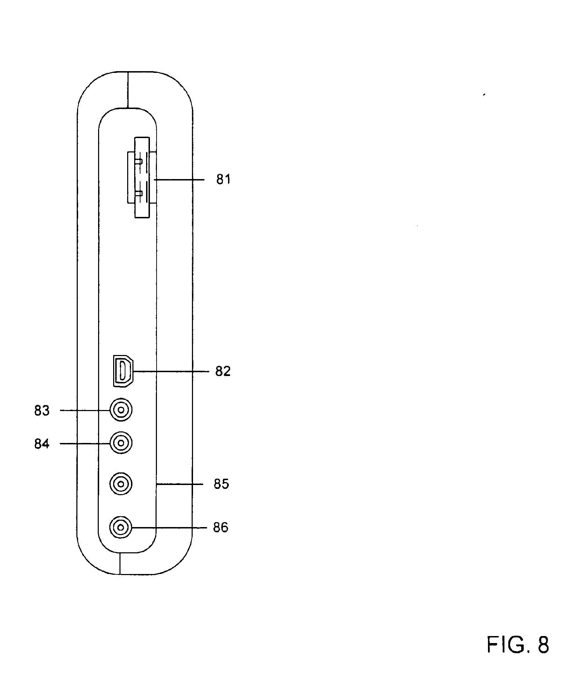

In Fig. 8 another side surface of the multimedia system is shown. On this side surface of the housing several interface for connecting to other electronic systems or for connecting to other electronic components is shown. By way of example, the multimedia system may additionally comprise a memory card reading unit 81 in which memory cards such as an SD card, an MMC card or any other memory card can be inserted. This memory card, by way of example, comprises picture data or any other data which could be displayed on the display of the multimedia system. The system can furthermore comprise a USB interface for connecting a USB connector which can be used for transmission of any kind of data. The power supply to an external power supply can be provided via connector 83. Connector 83 can also be used for recharging rechargeable batteries used in the multimedia system. For the exchange of audio and video data, the audio input 84 and the audio output 85 may be provided. Additionally, a connector 86 for connecting headphones or external loudspeakers is shown. Additionally, other connecting ports may be available, e.g. an audio output which can be used for connecting an actual surround loudspeaker system comprising three to seven loudspeakers. The audio data provided on DVDs are normally provided in different audio channels for the output of audio data in a surround sound mode. An audio output can now be provided in the multimedia system allowing the connection of such an audio surround system including several loudspeakers. It should be understood that a remote control unit can also be provided allowing the remote control of the different operating modes and features of the multimedia system. In addition to the DVD player an audio player adapted to play back compact disks and adapted to play back other audio formats such as MP3 can also be provided in the multimedia system.

Summarizing, this invention provides a multimedia system of small dimensions which can be handled easily and which provides a large variety of functions in a small device.

## Claims

1. Portable multimedia system comprising
- a DVD player (11) configured for play back of DVDs,
- a television receiver (12) configured for receiving digitally broadcast television programs,
- a navigation unit (14) configured for guiding the user of the multimedia system to a predetermined destination,
- a display (16) displaying the video signal components from the DVD player, the television receiver and the navigation unit, and
- at least two loudspeakers (18) emitting the audio signal components of the DVD player, the television receiver and the navigation unit.

2. Portable multimedia system according to claim 1, wherein a control unit (17) for controlling the DVD player (11), the television receiver (12) and the navigation unit (14) is provided, the control unit (17) displaying menu items on the display to be touched by the user for controlling the different functions of the multimedia system.

3. Portable multimedia system according to claim 1 or 2, wherein the system is provided in a housing, the two loudspeakers being provided in opposite end sections of the housing having a semi-cylindrical shape.

4. Portable multimedia system according to claim 1, 2 or 3, wherein an audio control unit is provided controlling the audio signal components of the DVD player, the television receiver and/or the navigation system in such a way that the different audio channels relative to each other are controller in such a way that a virtual surround sound is generated using the two loudspeakers.

5. Portable multimedia system according to any of the preceding claims, wherein the television receiver is adapted to receive television signals transmitted according to the DVB-T television transmission standard.

6. Portable multimedia system according to any of the preceding claims, **characterized by** further comprising a radio receiver adapted to receive analogously or digitally broadcast radio programs.

7. Portable multimedia system according to any of the preceding claims, **characterized by** further comprising a USB interface.

8. Portable multimedia system according to any of the preceding claims, **characterized by** further comprising a memory card reading unit.

9. Portable multimedia system according to any of the preceding claims, **characterized by** further comprising a writing unit configured for extracting an audio and/or video content and for storing it on a storage unit of the multimedia system in a compressed way.
